# EUROPEAN PATENT APPLICATION

(11) **EP 3 534 614 A1**
(43) Date of publication of application: **04.09.2019**
(21) Application number: 18159385.6
(22) Date of filing: 01.03.2018
(51) Int. Cl.: H04N 21/258, H04N 21/2187, H04N 21/658

(54) **VIDEO DISTRIBUTION PROCESS AND MEANS FOR REAL-TIME PUBLISHING VIDEO STREAMS**

(71) Applicant: Livetube Ltd., London, Greater London SW3 5QP (GB)
(72) Inventor: HEROLD, Sven, London SW11 3GJ (GB)
(74) Representative: Rössler, Matthias

(57) **Abstract**

A video distribution process performed by means of a video distribution platform (1) is disclosed which comprises at least the following steps:
- Receiving a video distribution request (2) from a mobile device (3) including at least a currently produced video content stream (4) and at least one meta information (5);
- Temporarily storing produced video content stream (4);
- Evaluating the video distribution request (2) by analysing at least the video content stream (4) or the meta information (5) to prepare an acceptance decision (6) to accept or decline the video distribution request (2);
- Setting the acceptance decision (6).

## Description

The present invention relates generally to transmitting, curating and publishing of currently produced video content to multiple recipients in near real time including but not limited to broadcaster, publishing professionals, social media platforms, corporates and other consumers of video content.

Due to the improved abilities of mobile devices to generate video content streams, and the increased access to high speed mobile networks around the world, everyone with a connected smartphone (described as mobile device having a camera and connected to a mobile or wireless network) is able to use its mobile device to produce and share a video content stream in real time. The content can relate to events, breaking news, accidents, or other topics. Every smartphone user can film what he/ she finds important and which is happening right now in front of their smartphone and share the content with people/ friends or on social platforms. However, currently it is a challenge to curate and distribute this live content. There is a significant problem to sort, prioritize, validate, evaluate, tag, describe, and/or in other form curate the video content in real time. Also, there is no solution available, which informs and alerts general audiences, broadcaster, publishing professionals, users on social media, corporate and other video related platforms based on the curation and criteria done. Therefore, it is currently difficult to promote the content to relevant and interested audiences in real time. This results in content clutter on most platforms. It also creates a challenge for advertisers in targeting audiences based on a correlation between content, location and personal data.

Audiences expect to receive relevant information in real time. However, this can cause a challenge due to the amount of information available at every given current time. In order to deliver relevant video content as quickly as possible to relevant audiences, there needs to be a decision (curation) - tool in-between sender and recipient.

However, aside from relevant and sorted content matched to their individual interests and needs in real-time, public audiences and professional recipients also expect a safe environment with personally and culturally appropriate content, which should be validated and verified in order to prevent any so called "fake news". In order to protect individuals and license holders, it also needs to be avoided that confidential, personally restricted or objectionable images or videos are published.

It is currently a technical problem to automatically determine the content of several incoming video streams simultaneously and to elect the relevant ones based on set criteria (ethics, compliance, advertising priorities, content strategy, audience expectations, etc.), then automatically to provide titles, location information, descriptions and/or other messages or images so as to prepare the content with a relevant information for lastly publishing the content on the most relevant platforms, alert the related users in real time and being potentially most relevant for predetermined or specified audiences.

It is an object of the invention to overcome the drawbacks of the prior art.

In particular, methods and systems shall be provided to enable an evaluation, curation, sorting, validation, valuation, prioritisation of incoming live video and/or publishing of video content to audiences in real-time, e.g. based on pre-set criteria combined with machine learning.

Furthermore, methods and systems shall be proposed which include effective and resource gentle use of computer equipment and communications.

According to the invention, the following subject-matter contribute to solve at least one of the before mentioned objects.

A video distribution process performed by means of a video distribution platform is proposed, which comprises at least the following steps:
- Receiving a video distribution request from a mobile device including at least a currently produced video content stream and at least one meta information;
- Temporarily storing produced video content;
- Evaluating the video distribution request by analysing at least the video content stream or the meta information to prepare an acceptance decision to accept or decline the video distribution request;
- Setting the acceptance decision;
- when accepting the video distribution request:
   a. Adding at least a text message to the produced video content stream,
   b. Electing at least one publication channel for the prepared produced video content stream,
   c. Pushing the prepared produced video content stream to the elected publication channel;
- when declining the video distribution request:
   z. Sending a message to the mobile device.

The video distribution process may be a method or process to receive, evaluate, amend/curate and publish video content. The video distribution process is performed by means of a video distribution platform, for example a processor or the like. The video distribution platform may also be regarded as a curation platform, e. g. depending on the actual curation activities executed by the platform itself. The platform can be accessible via the internet, a wireless connection, a telecommunication device, a laptop, etc. The video distribution platform may be part of a server, a cloud or any other programmable device. The video distribution platform may be provided with (temporary or permanent) connections being able to transfer video streams.

According to a first step, the platform may receive a video distribution request from a mobile device. The mobile device has an ability to film or record video, e.g. by means of at least one camera. The mobile device can be a so called smartphone. The request includes an application for distribution or publishing a currently produced video content stream to an audience. The video distribution request includes at least a currently produced video content stream and at least one meta information. The video distribution request may comprise a just or actually recorded video as well as non-video meta information (data). The video content stream may be of any useful format to ensure video quality, such as HLS, RTSP, AVI or MP4. The meta information may include an identification information (e.g. in text form) regarding the mobile device and/or its current operator or the producer of the video content stream. The at least meta information may relate to the video content. It is possible that a currently taken picture is also received from the mobile device.

The received video content may be temporarily stored for the time required to perform at least one of the other steps of the video distribution process. As an example, the received video content may be temporarily stored in a cloud structure (having a storage device), at least for the time required to evaluate the video distribution request and set a decision to accept/deny the request. The place of storage may be a part of the video distribution platform and/or of an external device being connected with the video distribution platform so as to ensure a stable and quality-saving transfer of the received video content.

The evaluating step may comprise an (automatic) analysing of the video content stream and/or the meta information to prepare an acceptance decision to accept or decline the video distribution request. The evaluating step may be carried out by a processor, in particular a processor of the distribution platform.

As an example, analysing the video content stream may generate at least one of the following results: recognition of a person, object, place, date or event shown in the recorded video stream. Such a result may be obtained by at least one of the following methods: Vision API., automatic picture recognition, precise video analysis, noise signals (identifying the presence of a signal buried in noise by using shot detection to distinguish scene changes within a video and discern only relevant entities at the video), shot or frame level (e.g. Identify "dog" within a new scene), Label detection, Explicit Content Detection (Detect adult content within a video), Video Transcription (Automatically transcribes video content), Regionalization: Specify a region where processing will take place (for regulatory compliance).Based on the result, the video stream may be provided with attribute information elected from a list or database.

A result of the video content stream analysis may be matched with the additionally received meta information. Both may be used to categorise the video content stream, to further specify the content of the video. Both may also be used to compare several video distribution requests relating to the same content.

The evaluation step may comprise a process of verifying the potential risk or demand for publishing the received video content stream. Based on the result(s), the video distribution request may be assigned an attribute elected from a generated or predefined list or database.

Setting an acceptance / decline decision can be the final outcome of the evaluation step. The decision may be developed by the processor of the video distribution platform. Based on the decision, the video distribution platform may perform at least two different routines. In any case, the video distribution platform may send a message to the mobile devise or its operator.

The process from receiving the produced video content to the setting of the acceptance / decline decision may be distinguished from the prior art and independently relevant for other applications, e.g. alarm systems, monitoring systems or the like. Therefore, the subsequent steps a. to c. may not be mandatory but with regard to the broadcasting application of particular relevance.

The routine following an acceptance decision may comprise at least the following processes which are initiated directly or automatically by the video distribution platform or its processor:
a. The temporarily stored produced video content is processed so as to include an additional text message. The text message may be integrated in the video stream, e.g. like a title, subtitle, category frame, (visible or inviable) watermark. Based on the format of the received video stream and/or the length of the text message, a specific or predetermined area of the visible content may be determined to include the text message. The content of the text message may be at least in part elected from a list or database. The content of the text message may be at least in part include data from the at least one meta data received together with the video distribution request. The content of the text message may include payment information, video content category information, location information.
b. An appropriate publication channel is elected where the prepared produced video content stream shall be published. To do so, there may be a list or database including a variety of different publication channels and based on the already received or generated information or data, one or more may be elected. The election may be temporarily stored. A pre-selection information concerning preferred or suitable publication channels may be included in the received meta data and considered or verified here. If a list or database of different publication channels is used, election criteria and/or publication channel(s) can be amended and/or limited on request, e.g. a request of the video distribution platform and/or the (operator of) the mobile device. It might also happen, that based on the meta data additional platforms are identified by the system and/or video contribution platform automatically. Examples could be special interest groups being identified during the story is developing. This could either happen via keyword searches on media platforms, social media platforms, chats or other publicly accessible sources for conversations.

Processes a. and b. may be executed subsequently in the order b. after a. or a. after b. It is possible that the processes a. and b. are executed at least in part simultaneously. For example, the text message may be positioned or generated so as to selectively confirm with predetermined requirements of the (potentially) elected publication channel(s).
c. According to the election decision, at least a section of the prepared produced video content stream is pushed or forwarded to at least one elected publication channel. The publication channel can be a part of the video distribution platform or an external platform, the internet, an online market place, a social network, a broadcasting platform, or the like. To do so, the prepared produced video content stream may be converted to a different format or standard. If several publication channels are elected, pushing or forwarding at least (e.g. different) sections of the prepared produced video content stream can be executed subsequently and/or simultaneously.

If the result of the evaluation is to decline a distribution of the received video distribution request, a message is sent to the mobile device. It is possible that the temporarily stored produced video content is also deleted. It is possible to interrupt an existing connection to the mobile device. It may also be possible to store at least the meta data and/or the results of the evaluation process or even a minor part of the video content stream (like specified pictures or images therefrom).

Step a. may include a video mixing procedure. For example, if several video streams of the same content (from different cameras of one or more mobile devices) are received, the video distribution platform may mix those video streams and/or sequences/images therefrom. A software algorithm executed by the processor of the video distribution platform may decide whether and how several video streams of the same contents are combined. As a result, the published prepared video content stream may include permanently and/or intermittently images from several video streams of the same content - e.g. different views on the same event, building, etc.

Instead or in combination, the video distribution platform may mix a received produced video content stream with images and/or video stream sequences being accessible to the video distribution platform, e.g. being stored at a storage medium. Publishing such pre-produced images and/or video stream sequences can be published if content of the received video stream is identified which shall not be published or pushed by the video distribution platform. In such cases, the pre-produced image and/or video stream sequence may partly or fully substitute produced video content stream. This may be removed, if the video distribution platform verifies that all the content of the received produced video content stream can be published (again).

The video distribution request may comprise at least one of the following meta information:
- a mobile device identification code,
- a position information of the mobile device,
- a producer information connected to the mobile device,
wherein at least one of said meta information is considered in at least the process of analysing at least the video content stream or in the evaluation process or in at least one of the processes a., b. or c..

A mobile device identification code may be a device ID (device identification) such as a distinctive number associated for example with a smartphone or similar handheld device. Device IDs are separate from hardware serial numbers. Such a mobile device identification code may be stored at the mobile device and automatically combined with the request. It may be required that the mobile device is first connected to a network of the video distribution platform so that the mobile device is connected and identified prior to receiving the video distribution request.

A position information of the mobile device may include geographical data to locate the mobile device (current device location). It may include data that enables a routine to locate the mobile device, e.g. by a tracking routine which may occur either via multilateration of radio signals between at least one cell tower of a network and the mobile device or via GPS.

A producer information may include a personal ID of the (identified) operator of the mobile device. For example, upon registering at the mobile device, the operator and/or the mobile device sets a or elect a producer information.

As the above list may not be complete, e. g. a picture of the current situation taken with the mobile device camera may also be received and considered. A picture taken with the camera of the mobile device may be analysed faster and easier than the video information from the stream, so as to verify or predefine the video content. During the evaluation step such additional information may be considered and/or weighted. For example the mobile device identification code may provide some information on quality, resolution, colours of the received video content stream. Position information can be used to identify and/or elect local publication channels, language requirements, currency, advertising massages, or the like. Producer information may be related to particular skills, experience, preferences, orders, previously delivered (accepted) video content streams of the operator or the like.

As exemplary demonstrated above, it might be very valuable to use such information in the process of analysing at least the video content stream and/or in the evaluation process and/or in at least one of the processes a., b. or c. Such information may be additionally requested by the video distribution platform, e.g. if the results of a first evaluation step are not considered to be sufficient. After receipt of the supplemental meta information (from the mobile device and/or an external database) the evaluation step may be repeated. If the supplemental information are directly included in the (firstly received) video distribution request, the evaluation process may be simplified so that a potential acceptance decision is obtained more quickly.

A supplement information may be retrieved from a database of the video distribution platform and considered within at least the evaluation step or the analysing step are. In particular, results of the analysis of the video content stream like recognition of a specific image of a building could be checked by analysing available position information or current orders connected to the operator of the mobile device. As another example, if the analysis recognized an "unspecified" building and uses available position information of the mobile device, historical data and/or images (in external databases) may be checked to identify the name of the building or any related historical information.

The video distribution platform may comprise a meta database where historical and/or currently generated data / information is accessible. The data may be categorised by geographical attributes. The data my comprise (real time or historical) weather data, traffic data, seismic data, flight data, emergency data, personal data, news, pictures, literature, etc.. Data of the meta database may be categorised in view of the age and/or frequency so that "younger" and "frequent" data indicate a more relevant information and/or produced video content.

Analysing the video content stream may include the step of automatic image analysis. Such analysis may be defined as the analysis of the characteristics of visual objects such, as visual similarity, coherence, hierarchical organization, concept load or density, feature extraction and/or noise removal.

Image analytics may be an automatic algorithmic extraction and logical analysis of information found in image data using digital image processing techniques. Computer image analysis may comprise 2D or 3D object recognition, image segmentation, motion detection, video tracking, or the like.

It is possible that the video distribution platform provides at least one object of comparison for such a step of automatic image analysis. The object may be elected from a list or database as a result of the available meta data, in particular to shorten the image analysing time. By doing so, the video distribution platform may easily and quickly identify objects (expected to be included in the video content stream). Subject-matter to be excluded from publication can be identified as well as subject-matter of currently high interest for a specific audience.

The step of automatic image analysis can be executed by the video distribution platform itself and/or an associated computer, e.g. where the received video content stream is temporarily stored.

The text message may include at least one result of the analysis of the video content stream or meta information. It is possible that a text message is produced (automatically) based on available and/or generated data/information obtained during the time period from receiving the video distribution request. By way of an example, (received) text fractures from meta data and/or (generated) specifications of identified objects during the image analysis and/or (current) position information of the mobile may be combined to form a text message to be included as a description of the video content. At least one result may cause a decision on the language of the text message so that the text message is directly produced in a predetermined language and/or is translated into a predetermined language.

During publishing, analysing at least the video content stream or the meta information may be continued, and if additional results are generated the text message is amended. The additional result may relate to a significant change of the video content and/or meta data, e.g. in case of a video stream produced during travelling.

It is possible that the video distribution platform receives or generates updated meta data or supplemental meta data at the time the prepared produced video stream is published. It may than be possible to amend the previously existing text message of the prepared video content stream or to add an additional text message (e.g. a subtitle) to the existing text message at a predetermined area of the images. It may be possible to set a video stream cut point where sequences or sections of the video stream are connected with each other, wherein the later published comprises the amended text message.

Newly generated or amended text messages may also be pushed separately to a publication channel, e.g. for a BLOG, Newsletter, SMS, in App Alerts or the like. This text message may be forwarded to customers having consumed the produced video content stream and/or a (specific) group of customer. Together with the amended text message, an image and/or a (short) sequence of the (newly) prepared produced video content stream may be forwarded to the mobile device and/or another publication channel.

During publishing, analysing at least the video content stream or the meta information may be continued, and if additional results are generated the election of the publication channel is amended. That may include that the video distribution platform stops pushing the prepared produced video content stream to the previously elected publication channel. That step may include that the video distribution platform pushes the prepared produced video content stream to newly elected publication channel.

It is possible that based on the new results, a broader or more specific audience may have interest in the video content stream and thus adaption with regard to the elected publication channel is enabled.

According to a specific example, it could be analysed that at the location of the mobile device (and the operator) a dangerous situations occurs. At the time of recognition, the video distribution platform may push a text message and/or the produced video content stream and/or meta data to a publication channel of a security and/or emergency authority. It is possible that the video distribution platform requests actual or updated meta data and forwards such data immediately to the relevant publication platform. The mobile device can be provided with additional (software) functionalities to allow an interaction with the video distribution platform in emergency cases.

A feedback information may be received from the at least one publication channel and the text message may be adapted to the feedback information during publishing.

The feedback information may include a language information. Based thereon, the video distribution platform may initiate a (machine) translation of the text message.

The feedback information may include a video comment, a situation comment, a rating or the like. The text information may substantially be amended, e. g. to remove wrong content and/or analysis results. It may also be possible that the same situation is described by other reporters and or viewer of the video distribution platform and/or the publication channel, where more precise or additional information are available. This may be used for adapting the text message as well, wherein a verification routine may be executed before doing so.

The prepared produced video content stream including the adapted text message may substitute the previously published video content stream.

A feedback information may be received from the at least one publication channel to estimate a value of the video content stream and to provide value information to the mobile device during publishing.

The video distribution platform may provide options or routines to the operator of the mobile device and/or the customer of the publication channel to increase the value of the video content stream. Such options or routines can be used by the video distribution platform to receive (additional and/or more precise and/or updated) meta data, video content information, background information relating to the video content, etc. For example, information which further specifies objects, situations, environmental descriptions, personal information, expected future and/or connected events, news, etc. shown in the video content stream. Based on the received details, curation of the published produced video content stream can be adapted so as to publish verified, high quality background information. The adapted published produced video content stream may cause an increased interest and a wide distribution.

The feedback information may include information about and/or from the user of the publication channel. For example, there may a rating procedure so that the feedback information includes a rating of the video content, the prepared produced video content stream, the text message, the operator of the mobile device (the producer), the video distribution platform and/or the publication channel. By way of another example, the feedback information may include information about the number of costumers/viewers and/or the (average) time of viewing. The feedback information can be used by the video distribution platform to (automatically) elect and/or amend and/or initiate supplemental service routine (reference to links, portals, news, networks as well as sending messages, advertising spots, invoicing or conducting payments, producing/storing additional video content stream sequences to be published and/or stored).

During publishing and at a predetermined event at least one data package including a section of the prepared produced video content stream may be forwarded to a specified publication channel.

A predetermined event may be at least one of the following group: amended text messages, incoming comments / news relating to the published prepared produced video content stream, a specified period of time, a request from a publication channel and/or a customer thereof, an emergency situation.

Based on the event, the video distribution platform may specify at least one (other or additional) publication channel and forward a data package including a section of the prepared produced video content stream. The data package may include a text message being linked to the respective event. The section or sequence of the prepared produced video content stream may include a video sequence of several seconds produces and/or curated close (meaning in particular within a period of less than 5 minutes, preferably less than 1 minute) to the point of time before and/or after the event.

The steps may be executed live meaning with a maximum delay of one (1) minute from receiving currently produced video content stream. Preferably, the delay is limited to 40 seconds, 30 seconds or even 20 seconds in maximum. Due to the preparation and/or curation of the produced video content stream, there may be a minimum delay of at least 10 seconds, 20 seconds or 30 seconds, pending in particular on the time and capacity required to execute the predetermined steps, processes and/or routines described herein.

If the there is a more time consuming activity required, the video distribution platform may decide to cut the stream and/or to influence the speed or frame rate to later compensate the undesired excess of the maximum delay within a given delay correction period.

If the produced video content stream has ended, the video distribution platform may (directly) determine price information depending for example on the value of the video content and/or the feedback information received. The video distribution platform may be arranged so that - during publishing - price information are included to the published prepared video content stream (at least for the one accessible to the operator of the mobile device / the reporter) and/or are sent out via a (separate) text message to the mobile device and/or at least one publication channel. After a publication session has ended, the video distribution platform may (immediately) calculate the royalty and (automatically) initiate a money transfer process to the producer. An automatic payment may be based on the number of viewers of the published prepared video content stream.

A video distribution platform may comprise means (devices) for carrying out the steps of the method as disclosed herein. Such means may comprise at least one device of the following group: a processor, a storage, a data interface, a (telecommunication) communication module.

The device may comprise a platform operation intelligence. The platform operation intelligence may contain a video processor to rework / curate the video content stream and a text processor which may generate a text message. The acceptance decision can also accomplished by a component / program / module of the platform operation intelligence. The platform operation intelligence may comprise a computer program which operates independent from human activities or interactions, in particular with regard to the steps of the process described herein. Alternatively, it may comprise a computer program which has at least one interface for human interactions, so that a human operator may influence preparation / curation of the video content stream and/or the generation of the text message.

The video distribution platform may comprise a computer (server) having access to or including a video analysing module and/or machine translation module. The video distribution platform may be connected or connectable to an external video analysing module and/or machine translation module and designed to receive curated video streams and/or text messages therefrom.

A computer program may comprise instructions which, when the program is executed by a computer, cause the computer to carry out the steps of the method as disclosed herein.

A data storage device may store a computer program as disclosed herein.

By way of example, the following process may be realised:
A video distribution process performed by means of a curation platform is proposed, which comprises at least the following steps:
   - Receiving a video distribution request from a mobile device including at least a currently produced video content stream, current mobile device location, a currently taken picture concerning the video content stream and at least one meta information on the content;
   - Temporarily storing produced video content;
   - Evaluating the video distribution request by analysing at least the video content stream, the current mobile device location, the picture or the meta information to prepare a decision to accept or decline the video distribution request;
   - Setting the acceptance decision;
   - when accepting the video distribution request:
      o Adding at least a text message to the mobile device (e.g. the operator who sent the video content);
      o Adding information on payment to the mobile device (e. g. the operator who sent the video content);
      o Adding a category, a location and a descriptive information to the video content stream;
      o Electing at least one publication channel for the prepared produced video content stream,
      o Pushing the prepared produced video content stream to the elected publication channel;
      o If relevant, sending out alerts to subscribed audiences, social media platforms and other relevant recipients (e.g. broadcaster, professional publisher)
      o Adding watermark information to the content stream (visible and/or invisible),
      o Adding real time subtitle information to the video content stream;
      o Translating the subtitle information in real time;
   - when declining the video distribution request:
      o Sending a message to the mobile device.

The invention as well as the technical background is further explained by the accompanying figure. The invention is however not restricted tot the content shown therein.

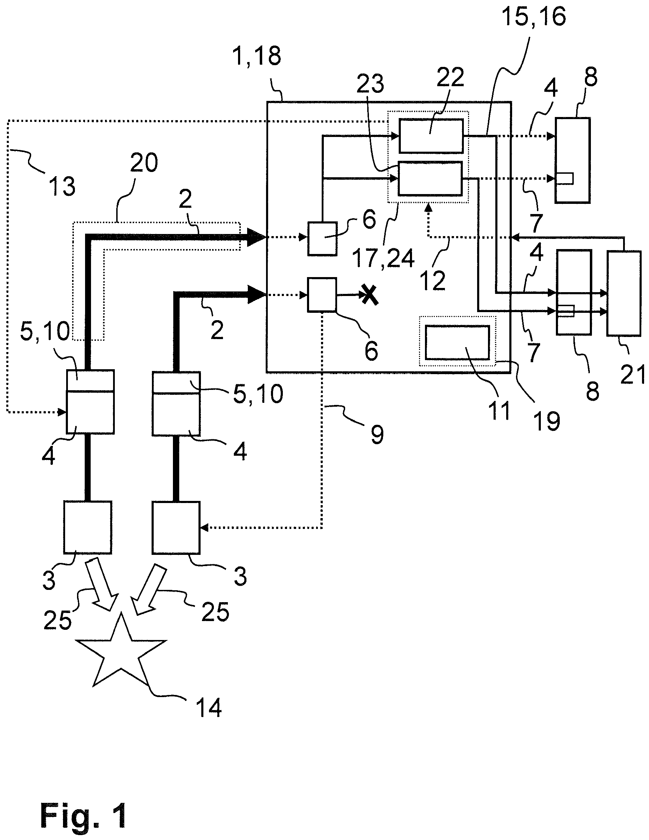

Fig. 1 shows the video distribution platform 1 and its interaction with external mobile devices 3. A mobile device 3 has at least one camera and can be used to do filming 25 to produce videos of certain events 14. Fig. 1 shows a situation in which two different mobile devices 3 are used to produce video content streams 4 of the (same) event 14 by means of filming 25.

The mobile devices 3 send a video distribution request 2 to the video distribution platform 1.The video distribution request include the (just or simultaneous) produced video content stream 4 together with meta information 5. The meta information may contain supplement information 10 (for example text information) concerning the content of the video. The video distribution request is sent do the video distribution platform 1 via a communication connection 20, which can be a wireless mobile communication connection 20, for example.

The video distribution platform 1 evaluates the video distribution request and finally falls an acceptance decision 6. The acceptance decision 6 can be done by an operator or by automatic decision means. The acceptance decision 6 may accept or reject/decline the video distribution request 2. In Fig. 1, two acceptance decisions 6 are depictured centrally wherein the upper is accepted and the lower is declined.

In case the video distribution request 2 is accepted by the acceptance decision 6, it is transferred to a platform operation intelligence 24. The platform operation intelligence 24 may contain a video processor 22 to rework / curate the video content stream 4 and a text processor 23 which may comprise a descriptive text (text message 7) regarding the video content stream 4. The acceptance decision can also accomplished by a component of the platform operation intelligence 24. The platform operation intelligence 24 may be a computer program which operates independent from human activities or interactions, in particular with regard to the steps of the process described herein. Alternatively, it may be a computer program which has at least one interface for human interactions, so that a human operator may influence preparation / curation of the video content stream 4 and/or the generation of a descriptive text (text message 7).

After curating the video content stream 4 and after generating the descriptive text (text message 7) in the platform operation intelligence 24 (respectively the video processor 22 or the text processor 23), the results of this operation are transferred to at least one publication channel 8. The publication channels 8 may be consumed by a (human) consumer 21. In particular, data packages 15 including a section 16 of the prepared produced video content stream 4 are forwarded to the specified publication channel 8. There might be the possibility for the consumers 21 to give feedback information 12 to the video distribution platform 1.

Here, feedback information 12 is given directly to the video content distribution platform 1. However, it is also possible that such feedback information 12 is fed through respective modules of the publication channels 8 to the video distribution platform 1. Here, the feedback information 12 is furthermore fed through to the platform operation intelligence 24 so that the platform operation intelligence 24 is able to consider / evaluate / rate the feedback information 12 for further curation measures regarding the video content stream 4 with the video processor 22 and/or to amend / change the descriptive text (text message 7) with the text processor 23.

In case a video content stream 4 is rejected by means of the acceptance decision 6, a decline message 9 is sent out to the mobile device 3 to give the operator of the mobile device 3 (the reporter) a feedback regarding the decision. The platform operation intelligence may also provide feedback information to the mobile device 3 and its operator (the reporter). As an example, such a feedback information includes a value information 13. A value information 13 may assist the operator of the mobile device 3 (the reporter) to optimize filming activity and/or to create video content streams 4 with a higher value.

The video distribution platform 1 may be executed on a computer 18. The computer 18 may also be a virtual computer in a server system environment. The platform operation intelligence 24 and its components are preferably computer programmes 17 which run on the computer 18. Preferably, the computer 18 has a database 11. In an embodiment, the database 11 is run on a data storage device 19 which is optimised for storing video content streams 4. Preferably, he platform operation intelligence 24 and its components have access to said database 11, e. g. to store video content streams 4 in the database 11. There may be a module to store videos content streams 4 in said database 11 to delay the video content streams 4 for a certain time interval, for example 30 seconds. This enables the platform operation intelligence 24 to curate the video content streams 4 for publication via the publication channels 8.

### Reference Numerals

- 1: video distribution platform
- 2: video distribution request
- 3: mobile device
- 4: video content stream
- 5: meta information
- 6: acceptance decision
- 7: text message
- 8: publication channel
- 9: decline message
- 10: supplement information
- 11: database
- 12: feedback information
- 13: value information
- 14: event
- 15: data package
- 16: section
- 17: computer program
- 18: computer
- 19: data storage device
- 20: connection
- 21: consumer
- 22: video processor
- 23: text processor
- 24: platform operation intelligence
- 25: filming

## Claims

1. Video distribution process performed by means of a video distribution platform (1) comprising at least the following steps:
- Receiving a video distribution request (2) from a mobile device (3) including at least a currently produced video content stream (4) and at least one meta information (5);
- Temporarily storing produced video content stream (4);
- Evaluating the video distribution request (2) by analysing at least the video content stream (4) or the meta information (5) to prepare an acceptance decision (6) to accept or decline the video distribution request (2);
- Setting the acceptance decision (6);
- when accepting the video distribution request (2):
a. Adding at least a text message (8) to the produced video content stream (4),
b. Electing at least one publication channel (8) for the prepared produced video content stream (4),
c. Pushing the prepared produced video content stream (4) to the elected publication channel (8);
- when declining the video distribution request (2):
z. Sending a decline message (9) to the mobile device (3).

2. Video distribution process according to Claim 1, wherein the video distribution request (2) comprises at least one of the following meta information (5):
- a mobile device identification code,
- a position information of the mobile device,
- a producer information connected to the mobile device,
wherein at least one of said meta information (5) is considered in at least the process of analysing at least the video content stream (4) or in the evaluation process or in at least one of the processes a., b. or c.

3. Video distribution process according to one of proceeding claims, wherein supplement information (10) is retrieved from a database (11) of the video distribution platform (1) and considered within at least the evaluation step or the analysing step are.

4. Video distribution process according to one of proceeding claims, wherein analysing the video content stream (4) includes the step of automatic image analysis.

5. Video distribution process according to one of proceeding claims, wherein the text message (7) includes at least one result of the analysis of the video content stream (4) or meta information (5).

6. Video distribution process according to one of proceeding claims, wherein during publishing analysing at least the video content stream (4) or the meta information (5) is continued, and if additional results are generated the text message (7) is amended.

7. Video distribution process according to one of proceeding claims, wherein during publishing analysing at least the video content stream (4) or the meta information (5) is continued, and if additional results are generated the election of the publication channel (8) is amended.

8. Video distribution process according to one of proceeding claims, wherein feedback information (12) is received from the at least one publication channel (8) wherein the text message (7) is adapted to the feedback information (12) during publishing.

9. Video distribution process according to one of proceeding claims, wherein feedback information (12) is received from the at least one publication channel (8) to estimate a value of the video content stream (4) and to provide value information (13) to the mobile device (3) during publishing.

10. Video distribution process according to one of proceeding claims, wherein during publishing and at a predetermined event (14) at least one data package (15) including a section (16) of the prepared produced video content stream (4) is forwarded to a specified publication channel (8).

11. Video distribution process according to one of proceeding claims, wherein the steps are executed live meaning with a maximum delay of one minute from receiving currently produced video content stream (4).

12. A video distribution platform (1) comprising means for carrying out the steps of the method of one of proceeding claims.

13. A computer program (17) comprising instructions which, when the computer program is executed by a computer (18), cause the computer (18) to carry out the steps of the method of one of proceeding claims.

14. A data storage device (19) storing a computer program (17) according to claim 12.
